Europäisches Patentamt

European Patent Office

Office européen des brevets

(19)

(11) Publication number: **0 020 382**
**B1**

(12) **EUROPEAN PATENT SPECIFICATION**

(45) Date of publication of patent specification: **08.06.83**

(21) Application number: **79901031.9**

(22) Date of filing: **18.12.78**

(86) International application number:
**PCT/US78/00224**

(87) International publication number:
**WO 80/01319 26.06.80 Gazette 80/14**

(51) Int. Cl.³: **G 01 F 23/04 //F16L7/00**

(54) **COMBINED DIPSTICK BREATHER TUBE.**

(43) Date of publication of application:
**07.01.81 Bulletin 81/1**

(45) Publication of the grant of the patent:
**08.06.83 Bulletin 83/23**

(84) Designated Contracting States:
**FR GB**

(56) References cited:
**DE - C - 732 517**
**DE - C - 873 309**
**US - A - 1 560 461**
**US - A - 2 192 543**
**US - A - 2 297 850**
**US - A - 3 738 176**

(73) Proprietor: **CATERPILLAR TRACTOR CO.**
**100 Northeast Adams Street**
**Peoria Illinois 61629 (US)**

(72) Inventor: **KEFFELER, Gary L.**
**304 9th St**
**Lacon, IL 61540 (US)**

(74) Representative: **Jackson, Peter Arthur et al,**
**GILL JENNINGS & EVERY 53 to 64, Chancery Lane**
**London WC2A 1HN (GB)**

Courier Press, Leamington Spa, England

Combined dipstick breather tube

This invention relates to dipstick devices and in particular to a combined dipstick breather tube device.

It is conventional in vehicles and the like having crankcases or other housings holding liquid, such as lubricating oil, to provide a dipstick means for use in measuring the level of the liquid or oil in the housing. It is further conventional in connection with such dipstick means to utilize a support tube through which the removable dipstick is inserted to have its lower end extend downwardly into the body of oil or liquid, thereby to provide an indication of the level of the oil or liquid in the housing. Such structure is utilized to prevent turbulence of the liquid from providing an erroneous reading of the level by effectively preventing such turbulence from splashing or otherwise affecting the level of the liquid at the dipstick. (For example see US—A—3,738,178).

In certain forms of dipstick devices, the dipstick tube is further arranged to define a breather device. However, where the dipstick tube is so used, the lower end of the tube cannot be disposed below the normal level of the liquid within the housing, otherwise the breather action is prevented. Where the tube is permitted to be disposed normally above the level of the liquid, a portion of the dipstick is therefore exposed to the turbulent movement of the liquid and erratic or erroneous readings are obtained.

Another example of a dipstick device is illustrated in U.S. Patent Specification No. 2,192,543. This is a complex device, the usual support tube being provided at its lower end with a number of elongate slots. A tubular filter or screen is provided around the outside of these slots to filter oil passing from within the tube into the sump. This arrangement suffers from the same problem as those outlined above in that a portion of the dipstick is exposed to turbulent movement of the liquid enabling the erratic or erroneous readings to be obtained. German Patent Specification No. 873,309 illustrates yet a further arrangement in which the usual tube is in part surrounded by an auxiliary tube, each tube being provided with a number of apertures through which fluid can flow, the apertures in either tube being offset one from the other. However, this construction still does not solve the turbulence problem since any fluid accidentally passing through apertures positioned higher than the normal liquid level will splash on to the dipstick and cause erroneous readings.

In accordance with the present invention, a device having means for measuring the level of liquid in a housing notwithstanding turbulence of the liquid therein comprises a tube having a first end portion adapted to be received in the liquid, an opposite second end portion adapted to project upwardly through a portion of the housing and having an upper open end and a midportion having an opening therein, positioned above the liquid level in use, to enable gaseous fluids to pass into the tube; and a dipstick extending removably longitudinally within the tube and having an end portion outwardly of the tube second end portion for manipulation of the dipstick, characterised by a baffle in the tube midportion radially inwardly of the opening and arranged to prevent liquid passing inwardly in use through the opening, such as a result of turbulence in the liquid, from impinging against the dipstick, the tube and baffle cooperatively defining part of a gaseous fluid flow passage between the upper end of the tube and the opening, the baffle comprising a tubular element extending longitudinally within the tube, and a plurality of spacer elements extending from an upper end of the tubular element outwardly into engagement with the tube above the level of the opening to position the element in the tube.

The tubular element thus prevents impingement of liquid passing inwardly through the vent opening onto any portion of the dipstick above the level of the liquid in the housing being measured.

In one example, the tubular element is centred coaxially within the dipstick tube by the spacer elements. Furthermore, the spacer elements may comprise deformed portions of the tubular element projecting outwardly into engagement with the dipstick tube wall.

Means may be provided for limiting the insertion of the baffle tube within the dipstick tube. This means may include a shoulder within the tube. Preferably the means for limiting downward movement of the tube further comprises cooperating shoulder means at the lower end of the baffle.

The combined dipstick breather tube device of the present invention is extremely simple and economical of construction while yet providing the highly desirable features discussed above.

An example of a device in accordance with the present invention is illustrated in the accompanying drawings, in which:—

Figure 1 is a fragmentary elevation of a device positioned in a housing containing a body of liquid;

Figure 2 is a fragmentary enlarged diametric section of the device; and,

Figure 3 is a transverse section taken substantially on the line 3—3 in Figure 2.

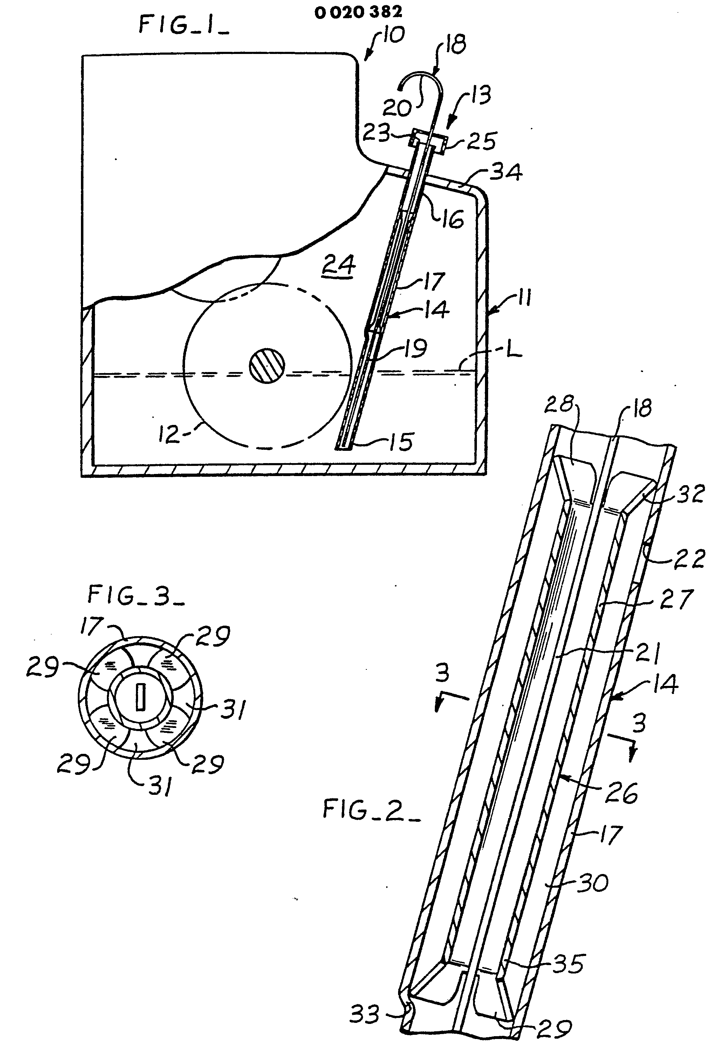

Figure 1 shows apparatus 10 including a housing 11 for holding a body of liquid L. Turbulence may be effected in the liquid by virture of moving elements 12, such as gears, etc. Notwithstanding such turbulence, it is desirable accurately to measure the level of the liquid L at times.

A combined dipstick breather tube device generally designated 13 for effecting such measurement and acting as a breather for the housing 11 is mounted in the housing 11.

More specifically, device 13 includes a dipstick tube 14 having a first, lower end portion 15 extending downwardly into the liquid L, an upper end portion 16 projecting upwardly through a portion 34 of the housing 11, and a midportion 17 disposed within the housing above the level of the level L.

A dipstick generally designated 18 defines a lower end portion 19 received within the lower end portion 15 of the dipstick tube 14 so as to extend to below the upper level of the liquid L in the housing 11. The upper end 20 of the dipstick defines a manipulating portion for facilitated movement of the dipstick into and outwardly from the dipstick tube, as desired. The dipstick further defines a midportion 21 disposed within the midportion 17 of the dipstick tube when the dipstick is installed in its normal inserted disposition within the dipstick tube, as shown in Figures 1 and 2.

To permit the dipstick tube 14 to further serve as a breather tube, a vent opening 22 is provided in dipstick tube midportion 17 so as to cooperate with the upper open end 23 of the dipstick tube 14 in defining a gaseous fluid flow passage communicating between the ambient atmosphere exteriorly of the housing 11 and the space 24 within housing 11 above the level of liquid L therein. Thus, tube 14 may serve as a breather tube for passing air inwardly into the space 24 and vapors outwardly therefrom, as may occur in the normal operation of the apparatus 10.

As shown in Figure 1, the dipstick may include a breather cap 25 carried on its outer end portion 20 overlying but spaced from the upper end 23 of the breather tube in the conventional manner.

The invention comprehends providing means within dipstick tube 14 for preventing impingement of liquid which may inadvertently pass inwardly through vent opening 22 against the dipstick 18, or more specifically, against the dipstick portion 21 inwardly of the opening 22 and extending downwardly therefrom to the upper level of the liquid L.

In the illustrated embodiment, the means for preventing such impingement comprises a baffle generally designated 26 having a portion 27 disposed inwardly of the vent opening 22. As shown in Figure 2, the baffle extends downwardly from the level of the vent opening 22 to adjacent the upper level of the liquid L. In the illustrated embodiment, the baffle comprises a tubular element which is positioned longitudinally coaxially within the dipstick tube 14. More specifically, spacer means generally designated 28 may be provided at the upper end of the baffle tube above the level of opening 22 to center that end of the tube in the dipstick tube 14. The lower end of the baffle tube may be centered within the dipstick tube by lower spacer means 29. Thus, the spacer means 28 and 29 cooperate to center the entire baffle tube within the dipstick tube so as to define an annular liquid flow passage 30 therebetween.

As shown in Figure 3, the spacer means 29 comprise integral portions of the lower end of the baffle tube projecting outwardly therefrom into engagement with the wall 17 defining the midportion of the dipstick tube. The spacer means 29 are annularly spaced to define therebetween a plurality of openings 31.

Thus, any liquid which inadvertently passes through the vent opening 22 to within the dipstick tube 14 is prevented from impinging on the dipstick 18 and instead is caused to flow downwardly through space 30 and through the openings 31 back to the body of liquid L in the lower portion of housing 11.

In the illustrated embodiment, the dipstick tube 14 is inclined to the vertical so that such liquid is caused to flow along the lower side of the tube below the lower end of the baffle tube in returning to the liquid body L. As will be obvious to those skilled in the art, the baffle tube may be arranged to extend fully downwardly to below the upper level of the liquid if desired.

The spacer means 28 is reversely identical to the spacer means 29 and, thus, defines a plurality of openings 32 similar to openings 31. Openings 32 provide communication between the vent passage 22 and the open upper end 23 of the dipstick tube so as to provide for the desired breather action discussed above. The upper end of the baffle tube is disposed above the level of the vent opening so as to effectively preclude impingement of the liquid passing through opening 22 onto the upper end of the dipstick.

The baffle tube 26 may be positioned within the dipstick tube by means of an annular shoulder (33) formed in the dipstick tube adjacent the upper level of the liquid body L. Spacer means 29 may project into abutment with the shoulder 33 to limit the downward movement of the baffle tube to the position shown in Figure 2, thereby providing an automatic positioning means in the assembly of the device 13. As will be obvious to those skilled in the art, any suitable means may be provided for effecting the desired retention of the baffle 26 in the desired disposition within the dipstick tube.

In the illustrated embodiment, the spacers 28 and 29 are formed integrally from the baffle tube. Any suitable means may be provided on the dipstick tube 14 for cooperation with the baffle tube in effectively locating the baffle tube therein. Alternatively, the baffle tube may be located within the dipstick tube by suitable apparatus and then fixed in such disposition as by welding, etc.

The invention comprehends that the combined dipstick-breather tube device be useful in all forms of industrial applications wherein sensing of the level of a body of liquid within a container is to be effected with the measurement being accurately made notwithstanding turbulence in the liquid being sensed.

The improved dipstick-breather tube device 13 may be utilized illustratively for determining the level of lubricating oil in a gearbox, such as in the illustrative embodiment 10 of apparatus embodying the invention. Further illustratively, the device 13 may be utilized in determining the level of lubricating oil in a crankcase, such as provided in conventional vehicles, including tractors and the like. The improved level measuring and breather device is extremely simple and economical of construction and, thus, may advantageously be utilized in a wide range of industrial applications.

## Claims

1. A device (13) having means for measuring the level of liquid (L) in a housing (11) notwithstanding turbulence of the liquid therein, the device comprising a tube (14) having a first end portion (15) adapted to be received in the liquid (L), an opposite second end portion (16) adapted to project upwardly through a portion (34) of the housing and having an upper open end (23), and a midportion (17) having an opening (22) therein positioned above the liquid level (L) in use to enable gaseous fluids to pass into the tube; and a dipstick (18) extending removably longitudinally within the tube (14) and having an end portion (20) outwardly of the tube second end portion for manipulation of the dipstick, characterised by a baffle (26) in the tube midportion (17) radially inwardly of the opening (22) and arranged to prevent liquid passing inwardly in use through the opening, such as a result of turbulence in the liquid, from impinging against the dipstick (18), the tube and baffle cooperatively defining part of a gaseous fluid flow passage between the upper end (23) of the tube and the opening (22), the baffle (26) comprising a tubular element extending longitudinally within the tube (14), and a plurality of spacer elements (28) extending from an upper end of the tubular element outwardly into engagement with the tube (14) above the level of the opening (22) to position the element in the tube.

2. A device according to claim 1, further comprising a plurality of spacer elements (29) extending from a lower end of the tubular element (26) outwardly into engagement with the tube (14).

3. A device according to claim 1 or claim 2, further comprising means (33) for limiting downward movement of the baffle (26) within the tube to prevent displacement of the baffle to below the opening (22).

4. A device according to claim 3, wherein the means for limiting downward movement of the baffle (26) includes a shoulder (33) within the tube.

5. A device according to claim 4, wherein the means for limiting downward movement of the tube further comprises cooperating shoulder means (29) at the lower end of the baffle (26).

6. A device according to any of claims 3 to 5, wherein the means for limiting downward movement of the baffle (26) spaces the baffle radially inwardly of the tube (14).

7. A device according to any of the preceding claims, wherein the baffle (26) is positioned coaxially within the tube (14).

## Revendications

1. Dispositif (13) ayant des moyens pour mesurer le niveau d'un liquide (L) dans une enveloppe (11) en dépit des turbulences du liquide, dispositif comprenant un tube (14) ayant une première partie d'extrémité (15) adaptée à être reçue dans le liquide (L), une seconde partie d'extrémité opposée (16) adaptée à faire saillie vers le haut à travers une partie (34) de l'enveloppe et ayant une extrémité supérieure ouverte (23) et une partie centrale (17) ayant une ouverture (22) placée au-dessus du niveau (L) du liquide en usage afin de permettre aux fluides gazeux de pénétrer dans le tube; et une jauge (18) s'étendant longitudinalement de façon amovible à l'intérieur du tube (14) et ayant une partie d'extrémité (20) à l'extérieur de la seconde partie d'extrémité du tube en vue de la manipulation de la jauge, caractérisé par un écran (26) placé dans la partie centrale (17) du tube, radialement vers l'intérieur par rapport à l'ouverture (22) et arrangé pour empêcher le liquide en usage de pénétrer par l'ouverture, par exemple par suite des turbulences dans le liquide, et de venir frapper la jauge (18), le tube et l'écran coopérant pour délimiter une partie d'un passage de circulation de fluide gazeux entre l'extrémité supérieure (23) du tube et l'ouverture (22), l'écran (26) comprenant un élément tubulaire s'étendant longitudinalement à l'intérieur du tube (14), et un certain nombre d'éléments d'espacement (28) s'étendant d'une extrémité supérieure de l'élément tubulaire vers l'extérieur pour venir en contact avec le tube (14) au-dessus du niveau de l'ouverture (22) afin de positionner l'élément dans le tube.

2. Dispositif selon la revendication 1, comprenant en outre un certain nombre d'éléments d'espacement (29) s'étendant vers l'extérieur depuis l'extrémité inférieure de l'élément tubulaire (26) pour venir en contact avec le tube (14).

3. Dispositif selon la revendication 1 ou 2, comprenant en outre des moyens (33) pour limiter le mouvement vers le bas de l'écran (26) dans le tube (14) afin d'empêcher le déplacement de l'écran au-dessous de l'ouverture (22).

4. Dispositif selon la revendication 3, dans lequel les moyens pour limiter le mouvement vers le bas de l'écran (26) comprennent un épaulement (33) à l'intérieur du tube.

5. Dispositif selon la revendication 4, dans lequel les moyens pour limiter le mouvement vers le bas de l'élément tubulaire comprennent en outre des épaulements coopérants (29) à l'extrémité inférieure de l'écran (26).

6. Dispositif selon l'une quelconque des revendications 3 à 5, dans lequel les moyens pour limiter le mouvement vers le bas de l'écran (26) maintiennent ce dernier espacé radialement à l'intérieur du tube (14).

7. Dispositif selon l'une quelconque des revendications précédentes, dans lequel l'écran (26) est placé coaxialement dans le tube (14).

## Patentansprüche

1. Vorrichtung (13) mit Mitteln zum Messen des Flüssigkeitspegels (L) in einem Gehäuse (11) trotz Turbulenz der darinnen befindlichen Flüssigkeit, wobei die Vorrichtung folgendes aufweist: Ein Rohr (14) mit einem ersten in der Flüssigkeit (L) aufzunehmenden Endteil (15), einem entgegengesetzten zweiten Endteil (16), geeignet zum nach oben ragen durch einen Teil (34) des Gehäuses hindurch und mit einem oberen offenen Ende (23), und einen Mittelteil (17), mit einer darin oberhalb des Flüssigkeitspegels (L) im Gebrauch positionierten Öffnung (22), um den laufgasförmiger Strömungsmittel in das Rohr zu gestatten, und ferner mit einem Tauchstab (18), der sich in entfernbarer Weise längs innerhalb des Rohrs (14) erstreckt und einen Endteil (20) aufweist, und zwar außerhalb des zweiten Endteils des Rohres zur Manipulation des Tauchstabes, gekennzeichnet durch ein Prallelement (26) im Rohrmittelteil (17) radial nach innen gegenüber der Öffnung (22) und angeordnet zur Verhinderung des Durchlaufs von Flüssigkeit nach innen im Gebrauch durch die Öffnung, wie beispielsweise in Folge der Turbulenz in der Flüssigkeit, vom Auftreffen gegen den Tauchstab (18), wobei Rohr- und Prallelement gemeinsam Teil eines gasförmigen Strömungsmittel-Strömungsdurchlasses zwischen dem oberen Ende (23) des Rohrs und der Öffnung (22) definieren, und wobei das Prallelement (26) ein Rohrelement aufweist, welches sich längs innerhalb des Rohrs (14) erstreckt, und wobei eine Vielzahl von Abstandselementen (28) sich von einem oberen Ende des Rohrelements nach außen in Eingriff mit dem Rohr (14) oberhalb des Pegels der Öffnung (22) zur Positionierung des Elements in Rohr erstreckt.

2. Vorrichtung nach Anspruch 1, ferner mit einer Vielzahl von Abstandselementen (29), die sich von einem unteren Ende des Rohrelements (26) aus nach außen in Eingriff mit dem Rohr (14) erstrecken.

3. Vorrichtung nach Anspruch 1 oder 2, ferner mit Mitteln (33) zur Begrenzung der Abwärtsbewegung des Prallelements (26) innerhalb des Rohrs zur Verhinderung der Versetzung des Prallelements nach unterhalb gegenüber der Öffnung (22).

4. Vorrichtung nach Anspruch 3, wobei die Mittel zur Begrenzung der Abwärtsbewegung des Prallelements (26) eine Schulter (33) innerhalb des Rohrs aufweisen.

5. Vorrichtung nach Anspruch 4, wobei die Mittel zur Begrenzung der Abwärtsbewegung des Rohrs ferner damit zusammenartbeitende Schultermittel (29) am unteren Ende des Prallelements (26) aufweisen.

6. Vorrichtung nach einem der Ansprüche 3—5, wobei die Mittel zur Begrenzung der Abwärtsbewegung des Prallelements (26) das Prallelement radial nach innen gegenüber dem Rohr (14) mit Abstand anordnen.

7. Vorrichtung nach einem der vorhergehenden Ansprüche, wobei das Prallelement (26) koaxial innerhalb des Rohrs (14) positioniert ist.

FIG_1_

0 020 382

FIG_3_

FIG_2_

1